**Europäisches Patentamt**

(19) **European Patent Office**

**Office européen des brevets**

(11) Veröffentlichungsnummer: **0 120 219**
**B1**

(12) # EUROPÄISCHE PATENTSCHRIFT

(45) Veröffentlichungstag der Patentschrift:
**12.08.87**

(21) Anmeldenummer: **84100945.9**

(22) Anmeldetag: **31.01.84**

(51) Int. Cl.⁴: **A 01 N 55/04, B 27 K 3/50**

(54) **Mittel mit bakterizider und fungizider Wirkung.**

(30) Priorität: **22.02.83 DE 3306035**

(43) Veröffentlichungstag der Anmeldung:
**03.10.84 Patentblatt 84/40**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**FR-A-1 506 345**
**US-A-4 086 066**

**CENTRAL PATENTS INDEX, BASIC ABSTRACTS JOURNAL, Sektion C: AGDOC, Woche D04, 18. März 1981, Nr. 4510D, Derwent, London, GB;**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Landsiedel, Horst, Auf dem Spitt 34, D-5758 Fröndenberg (DE)**
Erfinder: **Plum, Hans, Dr. Dipl.- Chem., Sulkshege 12, D-4700 Hamm (DE)**

EP 0 120 219 B1

## Beschreibung

Die bakterizide und fungizide Wirkung von Trialkylzinnverbindungen ist bekannt. Das Wirkungsoptimum dieser Verbindungsklasse liegt im allgemeinen dann vor, wenn die Gesamt-C-Zahl der am Zinn gebunden Alkylgruppen 9 - 12 beträgt. Kürzere oder längere Gruppen verringern die biozide Wirksamkeit (Bokranz, Plum, Fortschritte der chemischen Forschung, Bd. 16, Heft 3/4, S. 377). Trialkylzinnverbindungen zeigen zwar ein relativ breites Wirkungsspektrum; insbesondere gegen Braunfäulepilze, gegen verschiedene Mikroorganismen, z. B. gramnegative Bakterien und einzelne Bläue- und Schimmelpilze ist die Wirkung jedoch vergleichsweise schwach.

Methylendithiocyanat zeigt gute Wirkung gegen Basidiomyceten und einige Bläue- und Schimmelpilze sowie gegen wärmeliebende Pilzarten. Gegenüber Bakterien sowie einzelnen Schimmel-, Bläue- bzw. Moderfäulepilzen, wie Penicillium funiculosum, Aspergillus versicolor, Trichoderma viride, Chaetomium globosum, Pullularia Pullulans und Cladosporum herbarum ist die Wirkung wesentlich geringer.

Mit Wasser verdünnbare Formulierungen von Trialkylzinnverbindungen z. B. Abmischungen mit Emulgatoren, zeigen zwar stabile Verdünnungen, jedoch reicht das Wirkungsspektrum für verschiedene Konservierungsanwendungen, z. B. frisch geschlagenes Holz, nicht aus.

Aus Trialkylzinnverbindungen mit quarternären Ammoniumverbindungen, die ebenfalls fungizid wirken, lassen sich wasserverdünnbare Mischungen formulieren, die zwar ein etwas breiteres Wirkungsspektrum als das der Trialkylzinnverbindungen aufweisen, jedoch sind die Verdünnungen nicht stabil. Es treten nach einiger Zeit Ausflockungen, Absetzungen und z. T. Phasentrennungen auf.

Methylendithiocyanat wird im Handel in einer wasserverdünnbaren Formulierung angeboten. Die Verdünnungen zeigen bereits nach einigen Stunden Standzeit Absetzungen und einen deutlichen Bodensatz. Außerdem reicht das Wirkungsspektrum von Methylendithiocyanat für bestimmte Anwendungen, z. B. den Schutz von frisch geschlagenem Holz, nicht aus.

Ziel und Aufgabe der vorliegenden Erfindung war es, ein Verfahren zur Behandlung von Holz gegen holzbesiedelnde Pilze und Bakterien zu finden unter Einsatz von Mitteln, die eine gute Wirkung gegen ein breites Spektrum unterschiedlicher holzschädigender Mikroorganismen aufweisen, deren unverdünnte Formulierung mit einem Emulgator lager- und transportstabil und für die Anwendung zum Konservieren von verschiedenen Materialien durch einfaches Mischen mit Wasser verdünnbar ist. Die resultierenden wäßrigen Verdünnungen sollten auch nach längerer Lagerungszeit keine Entmischungen, Absetzungen oder Abrahmungen zeigen.

Es wurde nun überraschend gefunden, daß Mischungen von Trialkylzinnverbindungen und Methylendithiocyanat diese Aufgaben erfüllen. Sie zeigen eine synergistische biozide Wirkung, d. h. die Wirkung solcher Mischungen ist größer als die Summe der Wirkungen der Einzelkomponenten. Die synergistische Wirkung erstreckt sich auf verschiedene Mikroorganismen wie Bakterien, Schimmel- und Moderfäule-Pilze, insbesondere Bacillus vulgaris, Trichoderma viride, Pullularia pullulans und Chadosporum herbarum.

Aus den erfindungsgemäß einzusetzenden Wirkstoffmischungen lassen sich mit Emulgatoren stabile Konzentrate herstellen, die in Verdünnungen mit Wasser stabile, klare bzw. opaleszierende Zubereitungen ergeben.

Die Erfindung betrifft somit ein Verfahren zur Behandlung von Holz gegen holzbesiedelnde Pilze und Bakterien, wobei ein Wirkstoffgemisch aus

a) Trialkylzinnverbindungen der allgemeinen Formel $R_3SnX$, worin R für den Propyl- oder Butylrest steht und X den Säurerest von organischen oder anorganischen Säuren oder -$OSnR_3$ bedeutet,

b) Methylendithiocyanat.

Im Gewichtsverhältnis 5 : 1 bis 1 : 3, insbesondere 5 : 2 bis 1 : 1, eingesetzt wird.

Ein besonders bevorzugt einzusetzendes, mit Wasser verdünnbares Mittel wird erhalten, wenn die Wirkstoffe, gelöst in einer ausreichenden Menge eines geeigneten Lösungsmittels, zusätzlich übliche Emulgatoren im Gewichtsverhältnis 3 : 1 bis 1 : 3, bezogen auf das Wirkstoffgemisch, enthalten.

Die so erhaltenen Konzentrate sind stabil. Ihre wäßrigen Verdünnungen, die durch einfaches Mischen mit Wasser erhalten werden, zeigen auch nach längerer Lagerungszeit keine Entmischungen, Absetzungen oder Abrahmungen.

Bevorzugt wird als Emulgator ein nichtionogener Emulgator vom Typ Alkylarylpolyglykoläther oder Carbonsäurepolyglykolester eingesetzt.

Bevorzugt enthalten die erfindungsgemäß einzuseztenden mit Emulgator kombinierten Mittel 10 bis 40 Gewichts-% Wirkstoff, bezogen auf die Gesamtformulierung. Methylendithiocyanat wird zweckmäßig in der handelsüblichen Form, d. h. gelöst in geeigneten Lösungsmitteln, z. B. Isopropanol, Dimethylformamid, eingesetzt.

Als Emulgatoren können solche auf Basis von äthoxylierten Alkyl- und/oder Arylphenolen, n-Alkylbenzolsulfonaten, Carbonsäurepolyglykolestern verwendet werden.

Als Organozinnverbindungen werden solche der allgemeinen Formel $R_3SnX$ eingesetzt, wobei X für die biozide Wirkung in der Regel nur von untergeordneter Bedeutung ist (Bokranz, Plum, loc. cit.). Bevorzugt werden als Trialkylzinnverbindungen eingesetzt:

Tri-n-butylzinnoxid

Tri-n-butylzinnaphthenat

Tri-n-butylzinnlinoleat
Tri-n-butylzinnbenzoat
Tri-n-butylzinnabietat
Tri-n-butylzinntallat
Tri-n-butylzinndihexylborat
Tri-n-butylzinnacetylsalicylat
Tri-n-butylzinnborat
Tri-n-butylzinnphosphat.

Eine Reihe weiterer geeigneter Triorganozinnverbindungen sind beispielsweise in GB-A-1 059 629, GB-A-1 252 918 sowie in Ingham, Chemical Reviews, Bd. 60, 1960, S. 459 ff, beschrieben.

Für bestimmte Anwendungsgebiete kann es zweckmäßig sein, der Formulierung Antischaummittel, z. B. Siliconentschäumer in der Größenordnung von 0,001 - 0,01 Gew.-%, bezogen auf Formulierung, zuzusetzen.

Die Formulierungen mit Emulgatoren lassen sich ausgezeichnet in Form von wäßrigen Verdünnungen für den Holzschutz einsetzen. z. B. für frisch geschlagenes Holz, das leicht von Bakterien und holzverfärbenden Pilzen befallen wird, ebenso für Bauholz, das durch die synergistische Wirkung der erfindungsgemäßen Wirkstoffkombination gegen holzzerstörende und -verfärbende Pilze und auch gegen Bakterienbefall geschützt wird. Bakterien bewirken in der Regel keinen Abbau des Holzes, können jedoch einen Angriff durch Pilze begünstigen.

Das Auf- bzw. Einbringen der mit Wasser verdünnten Formulierungen in Holz kann durch Streichen, Spritzen oder Tauchen erfolgen, wobei der Stabilität der Verdünnungen besondere Bedeutung zukommt.

Für den Holzschutz können die Formulierungen in Kombination mit Insektiziden, wie z. B. Carbamate, Phosphorsäureester, chlorierte Kohlenwasserstoffe, Pyrethroide, eingesetzt werden.

Des weiteren eignen sich die Formulierungen in Verdünnungen mit Wasser zur bioziden Ausrüstung verschiedener Materialien wie Baustoffe, Textilien, Kunststoffe, Klebstoffe und Leder.

Die erfindungsgemäßen Formulierungen eignen sich ebenfalls zur bioziden Ausrüstung von wäßrigen Anstrichsystemen, z. B. Dispersionen, als Topfkonservierungsmittel und zum Schutz gegen Befall des Anstriches durch Bakterien und Pilze, speziell auch gegen den Befall von wäßrigen Holzanstrichsystemen, z. B. Alkydharzdispersionen, durch Oberflächenpilze.

Bei der Anwendung liegen die Wirkstoffkonzentrationen in den Verdünnungen im allgemeinen im Bereich von 0,1 - 5 % für den Holzschutz.

**Beispiel 1**

23 % Wirkstoff enthaltende Formulierung
Gewichtsverhältnis von Tributylzinnverbindung zu Methylendithiocyanat = 5 : 2

10 Gew.-Tl. Tri-n-butylzinnlinoleat
20 Gew.-Tl. 20 %ige Lösung von Methylendithiocyanat in einer Mischung von Dimethylformamid und Isopropanol
30 Gew.-Tl. nichtionogener Emulgator (Marlowet ® ISM).

Die Komponenten werden durch Rühren bei Raumtemperatur homogenisiert und man erhält eine klare Mischung, die mit Leitungswasser verdünnt stabile, klare bis schwach opaleszierende Zubereitungen ergibt.

**Beispiel 2**

15 % Wirkstoff enthaltende Formulierung
Gewichtsverhältnis von Tributylzinnverbindung zu Methylendithiocyanat = 4 : 3

8 Gew.-Tl. Tri-n-butylzinnaphthenat
30 Gew.-Tl. 20 %ige Lösung von Methylendithiocyanat (siehe Beispiel 1)
53 Gew.-Tl. nichtionogener Emulgator (Marlowet ® EF).

Die Komponenten werden durch Rühren bei Raumtemperatur homogenisiert und man erhält eine klare Mischung, die mit Leitungswasser verdünnt stabile, klare bis schwach opaleszierende Zubereitungen ergibt.

**Beispiel 3**

28 % Wirkstoff enthaltende Formulierung
Gewichtsverhältnis von Tributylzinnverbindung zu Methylendithiocyanat = 5 : 2

10 Gew.-Tl. Tri-n-butylzinndihexylborat
20 0ew.-Tl. 20 %ige Lösung von Methylendithiocyanat (siehe Beispiel 1)
20 Gew.-Tl. nichtionogener Emulgator (Marlowet ® SLS).

Die Komponenten werden durch Rühren bei Raumtemperatur homogenisiert und man erhält eine klare Mischung, die mit Leitungswasser verdünnt stabile, klare bis schwach opaleszierende Zubereitungen ergibt.


**Beispiel 4**

20 % Wirkstoff enthaltende Formulierung
Gewichtsverhältnis von Tributylzinnverbindung zu Methylendithiocyanat = 3 : 1

6 Gew.-Tl. Tri-n-butylzinnacetylsalicylat
10 Gew.-Tl. 20 %ige Lösung von Methylendithiocyanat (siehe Beispiel 1).
25 Gew.-Tl. nichtionogener Emulgator (Marlowet ® EF).

Die Komponenten werden durch Rühren bei Raumtemperatur homogenisiert und man erhält eine klare Mischung, die mit Leitungswasser verdünnt stabile, klare bis opaleszierende Zubereitungen ergibt.


**Beispiel 5**

25 % Wirkstoff enthaltende Formulierung
Gewichtsverhältnis von Tributylzinnverbindung zu Methylendithiocyanat = 2 : 1

20 Gew.-Tl. Tri-n-butylzinnaphthenat
50 Gew.-Tl. 20 %ige Lösung von Methylendithiocyanat (siehe Beispiel 1)
50 Gew.-Tl. nichtionogener Emulgator (Marlowet ® ISM).

Die Komponenten werden durch Rühren bei Raumtemperatur homogenisiert und man erhält eine klare Mischung, die mit Leitungswasser verdünnt stabile, klare bis opaleszierende Zubereitungen ergibt.


**Beispiel 6**

25 % Wirkstoff enthaltende Formulierung
Gewichtsverhältnis von Tributylzinnverbindung zu Methylendithiocyanat = 5 : 4

10 Gew.-Tl. Tri-n-butylzinnoxid
50 Gew.-Tl. 20 %ige Lösung von Methylendithiocyanat (siehe Beispiel 1)
95 0ew.-Tl. nichtionogener/anionenaktiver Emulgator (Marlowet ® OFA).

Die Komponenten werden durch Rühren bei Raumtemperatur homogenisiert und man erhält eine klare Mischung, die mit Leitungswasser verdünnt stabile, klare bis opaleszierende Zubereitungen ergibt.


**Beispiel 7**

17 % Wirkstoff enthaltende Formulierung
Gewichtsverhältnis von Tributylzinnverbindung zu Methylendithiocyanat = 1 : 1

6 Gew.-Tl. Tri-n-butylzinnlinoleat
30 Gew.-Tl. 20 %ige Lösung von Methylendithiocyanat (siehe Beispiel 1)
34 Gew.-Tl. nichtionogener Emulgator (Marlowot ® EF).

4

**Beispiel 8**

16 % Wirkstoff enthaltende Formulierung
Gewichtsverhältnis von Tripropylzinnverbindung zu Methylendithiocyanat = 5 : 3

5 Gew.-Tl. Tri-n-propylzinnborat
15 Gew.-Tl. 20 %ige Lösung von Methylendithiocyanat (siehe Beispiel 1)
30 Gew.-Tl. nichtionogener Emulgator (Marlowet ® EF).

Die Komponenten werden durch Rühren bei Raumtemperatur homogenisiert und man erhält eine klare Mischung, die mit Leitungswasser verdünnt, stabile, klare bis opaleszierende Zubereitungen ergibt.

**Beispiel 9**

Lösungsmittelhaltige Holz-Grundierung mit fungizider Wirkung
Gewichtsverhältnis von Tributylzinn-Verbindung zu Methylendithiocyanat = 3 : 1

1,5 Gew.-Tl. Tri-n-butylzinnphosphat
2,5 Gew.-Tl. 20 %ige Lösung von Methylendithiocyanat (siehe Beispiel 1)
10 Gew.-Tl. 60 %ige Alkydharzlösung in Testbenzin
4,5 Gew.-Tl. Diäthylenglykolmonobutyläther
81,5 Gew.-Tl. Testbenzin (Siedebereich 180 -210 °C).

Die Komponenten werden bei Raumtemperatur homogenisiert. Man erhält eine klare, gebrauchsfertige Lösung.

Zum Wirkungsvergleich wurden mit den im folgenden näher bezeichneten wäßrigen Lösungen Papierrundfilter ($\oslash$ 5,5 cm) getränkt, an der Luft getrocknet und danach in Petrischalen auf Plate-Count-Agar, der mit Bakteriensuspension beimpft war, gelegt und 2 Tage bei +37°C bebrütet. Danach wurden die Größen der Hemmzonen um die Filter bestimmt:

**Tabelle 1**: (Hemmzonen in mm)

| Wirkstofflösung | Gew.-% Wirkstoff in Wasser | Bacillus subtilis | Bacillus mesentericus | Bacillus vulgaris |
|---|---|---|---|---|
| Tri-n-butylzinnaphtenat (TBTN) | 0,3 | 10-12 | 10-12 | 5- 7 |
| | 0,6 | 12-15 | 10-12 | 8-10 |
| Tri-n-butylzinnlinoleat (TBTL) | 0,3 | 10-12 | 10-12 | 8-10 |
| | 0,6 | 12-15 | 12-15 | 8-10 |
| Tri-n-butylzinndihexyl-borat (TBTDB) | 0,6 | 12-15 | 8-10 | 6- 8 |
| | 0,6 | 12-15 | 10-12 | 8-10 |
| Tri-n-butylzinnacetyl-salicylat (TBTAS) | 0,3 | 12-15 | 10-12 | 8-10 |
| | 0,6 | 12-15 | 12-15 | 10-12 |
| Tri-n-propylzinnborat (TPTB) | 0,3 | 10-12 | 10-12 | 10-12 |
| | 0,6 | 12-15 | 12-15 | 10-12 |
| Methylendithiocyanat (MBT) | 0,3 | 8-10 | 4-5 | 4- 6 |
| | 0,6 | 10-12 | 8-10 | 8-10 |

## Tabelle 1 (Fortsetzung)

| Wirkstofflösung | Gew.-% Wirk-stoff in Was-ser | Bacillus subtilis | Bacillus mesente-ricus | Bacillus vulgaris |
|---|---|---|---|---|
| TBTN : MBT = 4 : 3 Gew.-Tl. (Beispiel 2) | 0,3 | 12-15 | 12-15 | 10-12 |
|  | 0,6 | >15 | >15 | 12-15 |
| TBTN : MBT = 2 : 1 Gew.-Tl. (Beispiel 5) | 0,3 | 12-15 | 12-15 | 10-12 |
|  | 0,6 | 12-15 | >15 | 10-12 |
| TBTL : MBT = 5 : 2 Gew.-Tl. (Beispiel 1) | 0,3 | 12-15 | 12-15 | 10-12 |
|  | 0,6 | 12-15 | >15 | 10-12 |
| TBTDB: MBT = 5 : 2 Gew.-Tl. (Beispiel 3) | 0,3 | 10-12 | 10-12 | 10-12 |
|  | 0,6 | >15 | 12-15 | 10-12 |
| TBTAS: MBT = 3 : 1 Gew.-Tl. (Beispiel 4) | 0,3 | >15 | >15 | 12-15 |
|  | 0,6 | >15 | >15 | >15 |
| TPTB : MBT = 5 : 3 Gew.-Tl. (Beispiel 8) | 0,3 | >15 | >15 | 12-15 |
|  | 0,6 | >15 | >15 | >15 |
| O-Probe | 0 | 0 | 0 | 0 |

Nach der Methode aus Tabelle 1 wurden getränkte Papierrundfilter auf Biomalzagar, besprüht mit Sporensuspension von Testpilzen, gelegt und 3 Wochen bei +30°C bebrütet. Danach wurden die Hemmzonen um die Proben bestimmt:

**Tabelle 2**: (Hemmzonen in mm)

| Wirkstofflösung | Gew.-% Wirk-stoff in Was-ser | Clado-sporum herba-rum | Tricho-derma viride | Chaeto-mium globo-sum | Pullu-laria pullu-lans | Asper-gillus versi-color |
|---|---|---|---|---|---|---|
| Tri-n-butyl-zinnaphtenat (TBTN) | 0,3 | 1-2 | 0+ | 4-6 | 3-4 | 4- 5 |
|  | 0,6 | 2-3 | 1-2 | 6-8 | 4-6 | 6- 8 |
| Tri-n-butyl-zinnlinoleat (TBTL) | 0,3 | 2-3 | 0+ | 5-7 | 3-4 | 4- 5 |
|  | 0,6 | 3-4 | 1-2 | 6-8 | 5-7 | 7- 9 |
| Tri-n-butyl-zinndihexyl-borat (TBTDB) | 0,3 | 2-3 | 0-1 | 6-8 | 4-6 | 6- 8 |
|  | 0,6 | 5-7 | 1-2 | 8-10 | 7-9 | 8-10 |

Tabelle 2 (Fortsetzung)

| Wirkstofflösung | Gew.-% Wirkstoff in Wasser | Cladosporum herbarum | Trichoderma viride | Chaetomium globosum | Pullularia pullulans | Aspergillus versicolor |
|---|---|---|---|---|---|---|
| Tri-n-butylzinn-acetylsalicylat (TBTAS) | 0,3<br>0,6 | 4-5<br>8-10 | 1-2<br>2-3 | 8-10<br>10-12 | 5-7<br>8-10 | 10-12<br>10-12 |
| Tri-n-propyl-zinnborat (TPTB) | 0,3<br>0,6 | 3-4<br>5-6 | 1-2<br>2-3 | 5-7<br>6-8 | 4-5<br>6-7 | 6- 8<br>8-10 |
| Methylendithio-cyanat (MBT) | 0,3<br>0,6 | 0-1<br>5-7 | 0+++<br>0+++ | 2-3<br>4-6 | 1-2<br>4-6 | 2- 3<br>5- 7 |
| TBTN : MBT = 4 : 3 Gew.-Tl. (Beispiel 2) | 0,3<br>0,6 | 4-5<br>8-10 | 1-2<br>3-4 | 6-8<br>10-12 | 6-8<br>10-12 | 6-8<br>10-12 |
| TBTN : MBT = 2 : 1 Gew.-Tl. (Beispiel 5 | 0,3<br>0,6 | 4-6<br>7-9 | 1-2<br>3-4 | 5-7<br>10-12 | 6-8<br>10-12 | 6-8<br>10-12 |
| TBTL : MBT = 5 : 2 Gew.-Tl. (Beispiel 1) | 0,3<br>0,6 | 3-4<br>8-10 | 1-2<br>2-3 | 5-7<br>8-10 | 7-9<br>10-12 | 6-8<br>10-12 |
| TBTDB : MBT = 5 : 2 Gew.-Tl. (Beispiel 3) | 0,3<br>0,6 | 5-7<br>10-12 | 3-4<br>4-5 | 8-10<br>10-12 | 8-10<br>12-15 | 8-10<br>12-15 |
| TBTAS : MBT = 3 : 1 Gew.-Tel. (Beispiel 4) | 0,3<br>0,6 | 5-7<br>12-15 | 3-4<br>5-7 | 10-12<br>12-15 | 10-12<br>>15 | 10-12<br>> 15 |
| TBTL : MBT = 1 : 1 Gew.-Tl. (Beispiel 7 | 0,3<br>0,6 | 4-5<br>10-12 | 1-2<br>2-3 | 6-8<br>8-10 | 6-8<br>10-12 | 6-8<br>10-12 |
| TPTB : MBT = 5 : 3 Gew.-Tl. (Beispiel 8) | 0,3<br>0,6 | 5-6<br>10-12 | 2-3<br>4-5 | 8-10<br>10-12 | 8-10<br>12-15 | 10-12<br>12-15 |
| 0-Probe | 0+++ | 0+++ | 0+++ | 0+++ | 0+++ | 0+++ |

+ = leichter Bewuchs der Probe
+ + + = starker Bewuchs der Probe

7

**Patentansprüche**

1. Verfahren zur Behandlung von Holz gegen holzbesiedelnde Pilze und Bakterien, dadurch gekennzeichnet, daß man ein biozides Mittel verwendet, daß als Wirkstoffe die Komponenten

a) Trialkylzinnverbindungen der allgemeinen Formel $R_3SnX$, worin R für den Propyl- oder Butylrest steht und X den Säurerest von organischen oder anorganischen Säuren oder $-OSnR_3$ bedeutet,

b) Methylendithiocyanat

im Gewichtsverhältnis 5 : 1 bis 1 : 3, insbesondere 5 : 2 bis 1 : 1, enthält.

2. Verfahren gemäß Anspruch 1, dadurch gekennzeichnet, daß die Wirkstoffe gelöst in einer ausreichenden Menge eines geeigneten Lösungsmittels sowie kombiniert mit üblichen Emulgatoren im Gewichtsverhältnis 3 : 1 bis 1 : 3 bereitgestellt und für die Holzschutzanwendung mit Wasser auf die gewünschte Einsatzkonzentration der Wirkstoffe verdünnt werden.

**Claims**

1. Method for the treatment of wood against wood-colonising fungi and bacteria, characterised in that a biocidal material is used which contains as active ingredients the components

(a) trialkyltin compounds of the general formula $R_3SnX$ where R represents propyl or butyl and X represents the acid group of an organic or inorganic acid or $-OSnR_3$.

(b) methylenendithiocyanate

in a weight ratio of 5:1 to 1:3. especially 5:2 to 1:1.

2. Method according to claim 1, characterised in that the active ingredients dissolved in a sufficient mixture of a suitable solvent as well as combined with usual surfactants are prepared in a weight ratio of 3:1 to 1:3 and for the wood-protection treatment are diluted with water to the desired concentration of the active ingredients.

**Revendications**

1. Procédé pour traiter le bois contre des mycètes et des bactéries vivant dans le bois, procédé caractérisé en ce qu'on utilise un produit biocide qui contient comme matières actives:

a) des composés trialkyl-stanniques répondant à la formule générale $R_3SnX$ dans laquelle R représente le radical propyle ou le radical butyle et X le radical acide d'un acide minéral ou organique ou un radical $-OSnR_3$, et

b) du dithiocyanato-méthane,

dans un rapport pondéral compris entre 5 : 1 et 1 : 3, plus particulièrement entre 5 : 2 et 1 : 1.

2. Procédé selon la revendication 1 caractérisé en ce qu'on met les matières actives la forme d'une solution dans une quantité suffisante d'un solvant approprié, additionnée d'émulsionnants usuels dans un rapport pondéral compris entre 5 : 1 et 1 : 3, et, pour des applications dans le domaine de la protection du bois, on dilue cette formulation avec de l'eau de manière à porter la concentration en matières actives à la valeur voulue pour l'application.